# EUROPEAN PATENT SPECIFICATION

(11) **EP 0 236 071 B1**
(45) Date of publication and mention of the grant of the patent: **06.10.1993**
(21) Application number: 87301691.9
(22) Date of filing: 26.02.1987
(51) Int. Cl.: B01D 27/02

(54) **Filtering apparatus**
Filterapparat
Appareil de filtrage

(30) Priority: 07.03.1986 US 837167
(43) Date of publication of application: 09.09.1987
(73) Proprietor: PALL CORPORATION, Glen Cove, New York 11542 (US)
(72) Inventor: Jewell, James E., Centerport New York 11721 (US); Koslow, Evan E., Westport Connecticut 06880 (US)
(74) Representative: Corin, Christopher John

(56) References cited:
- EP-A- 0 090 483
- EP-A- 0 148 638
- EP-A- 0 159 698
- EP-A- 0 172 003
- DE-B- 2 118 777
- FR-A- 2 346 035
- US-A- 3 457 339
- US-A- 4 025 438
- US-A- 4 104 170
- US-A- 4 540 489
- Thomas D. Brock:"Membrane Filtration", a User's Guide and Reference Manual, Springer-Verlag, 1983, pp. 8,22,23,74,100-102

## Description

The present invention relates to a filter cartridge for removing contaminants from water. The invention also relates to a filter arrangement for removing contaminants from water.

Water may contain many different kinds of contaminants including, for example, particulates, harmful chemicals, and microbiological organisms such as pathogenic bacteria, amoeba, flagellate, and viruses. In a variety of circumstances, these contaminants must be removed before the water can be used. For example, in many medical applications and in the manufacture of certain electronic components, extremely pure water is required. As a more common example, any harmful and observable contaminants must be removed from water before it is potable, i.e., fit to drink.

Ideally, a filtering apparatus for removing this broad spectrum of contaminants would comprise a single, small, lightweight, self-contained device rather than a complex multicomponent and/or multistage system to remove the various contaminants. Such a device would not only be more reliable than a complex system, but it would also be far more portable. Thus, it could be carried into very primitive environments, for instance, during backpacking, to provide a supply of potable water.

In a preferred design, the filtering apparatus should present a low resistance to the flow of water through the apparatus so that in a remote environment, where the electricity necessary to drive a pump may be unavailable, the filtering apparatus may simply be connected between upper and lower containers of water, for example, between a container of water hanging from a tree and a container of water resting on the ground. The filtering apparatus should also have sufficient internal structural integrity to withstand ever greater pressures if, for example, a hand pump or other source of pressure is available to drive the water through the filtering apparatus. Further, the filtering apparatus should include a prefilter portion which is able to remove substantial quantities of gross contaminants without becoming completely clogged so that a considerable amount of purified liquid can be obtained.

Thus, specific problems to be overcome include providing a filtering apparatus (1) that removes a broad spectrum of contaminants from water; (2) that is highly portable and reliable; (3) that presents a low resistance to the flow of water through the apparatus; and (4) that removes the contaminants from a substantial volume of water without becoming clogged.

US-A-4025438 discloses a water filter device that can be threaded on a water faucet to remove particles, dissolved minerals and some bacteria. US-A-4104170 discloses a water filter that can be threaded to the conduit of a pump to remove particulate matter and impurities.

US-A-4540489 discloses a water purifier comprising a pre-filter for removing large particles, an activated carbon filter for the adsorption of toxic chemicals and a ceramic microscreen preferably containing a bacteriostatic agent and arranged downstream of the pre-filter and the activated carbon filter. The water flows radially through the pre-filter, the carbon filter and the ceramic microscreen.

The publication "Membrane Filtration" by Thomas D. Brock (Springer-Verlag 1983) discloses the use of depth filters as prefilters to remove larger particles from a fluid in order to reduce the clogging of membrane filters.

According to the invention, there is provided a filter assembly for removing contaminants from water flowing through the filter assembly, the filter assembly including a fibrous filter for removing particulate contaminants from the water, a sorbent bed for removing chemical contaminants from the water downstream of the fibrous filter, and a member for removing microbiological contaminants from the water and arranged downstream of the fibrous filter and the sorbent bed and the fibrous filter, the sorbent bed, and the downstream member being cylindrically shaped and arranged for radial flow of water therethrough characterized in that the downstream member comprises a microporous membrane having a pore rating in the range from 0.02 micrometer to 0.5 micrometer, the fibrous filter comprising a microfibrous mass including a downstream portion and an upstream portion having a larger pore size than the downstream portion.

Preferred embodiments also feature a sorbent containing structure in which the sorbent material is immobilized, for example, by a polymeric binder such as powdered polyethylene, by entrapment in a microfibrous web of various materials, e.g., polymeric microfibers of polypropylene, cellulose, or nylon, or by a combination of physically restraining materials. Preferably, the sorbent containing structure contains a sufficient quantity of sorbent material and the flow velocity through the sorbent material is sufficiently low to allow an adequate contact or resident time between the sorbent material and the chemical contaminants which are to be sorbed by the sorbent material. Since different chemical contaminants have different sorbent kinetics and different sorbent materials have different sorption capacities, the sorbent containing structure may also be fashioned from a variety of suitable materials including, for example, activated carbon, activated alumina, molecular sieve, of ion exchange resins.

The invention will now be described, by way of example, with reference to the accompanying diagrammatic drawings, in which;
Figure 1 is a sectional side view of an exemplary filtering apparatus embodying the present invention;
Figure 2 is a partial sectional end view of the filtering apparatus of Figure 1 as viewed along lines 2-2; and
Figure 3 is an illustration of a liquid filtering system incorporating the filtering apparatus of Figure 1.

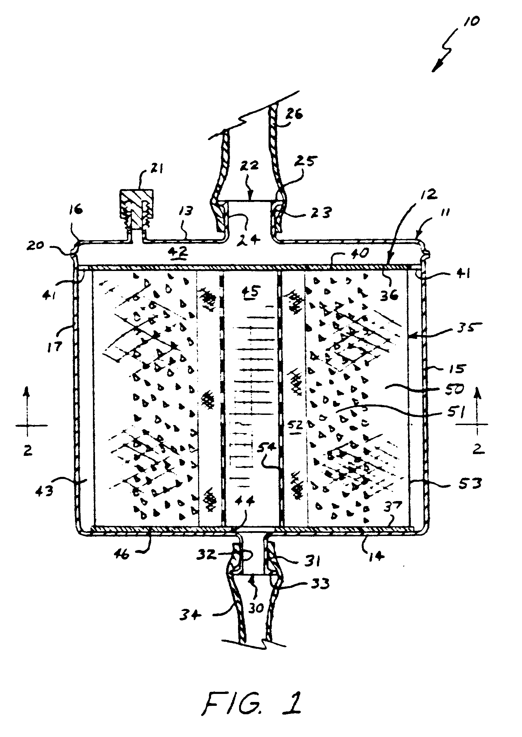

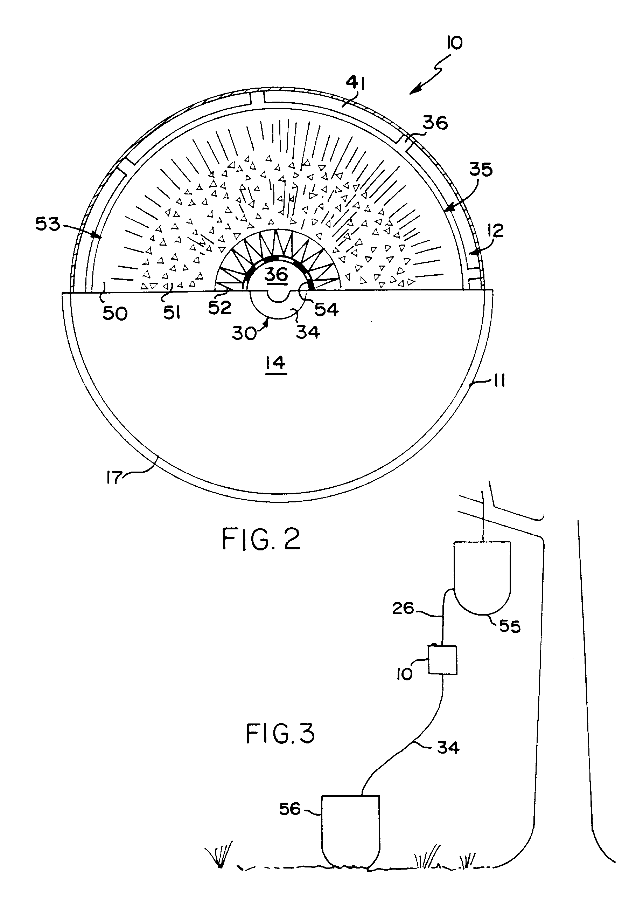

As shown in Figures 1 and 2, an exemplary filter cartridge 10 embodying the present invention comprises a generally cylindrical housing 11 and a cylindrical filter arrangement 12 disposed within the housing 11. The filter cartridge 10 purifies water, containing a broad spectrum of contaminants including, for example, solid particulates including radioactive isotopes, certain polyvalent dissolved salts, toxic organic chemicals such as many pesticides, and microbiological contaminants such as bacteria, amoeba or flagellates.

The housing 11 is preferably fabricated from polypropylene, although it may be fabricated from any sufficiently rigid material, including other polymers or sheet metal. In the preferred embodiment, the housing 11 has a top wall 13, a bottom wall 14 and a cylindrical side wall 15 and comprises an upper portion 16 and a lower portion 17 joined to one another at a circumferential joint 20. The top wall 13 of the housing 11 includes an air-bleed valve 21 and an inlet 22. The inlet 22 comprises a coaxially projecting cylindrical protrusion 23 with a coaxial hole 24 and a flange 25 which facilitates connecting the inlet 22 to a supply line 26. Similarly, the bottom wall 14 of the housing 11 has an outlet 30 comprising a coaxially projecting cylindrical protrusion 31 with a coaxial hole 32 and a flange 33 which facilitates connecting the outlet 30 to a drain line 34. Alternatively, the cylindrical protrusions 23, 31 of the inlet 22 and the outlet 30 may have threaded portions rather than flanges 25, 33 to facilitate connection of the supply line 26 and the drain line 34.

The filter arrangement 12 comprises a cylindrical filter assembly 35 disposed between top and bottom end caps 36, 37 which direct liquid radially through the filter assembly 35. The end caps 36, 37 also lend axial and radial support to the filter assembly 35. In the preferred embodiment, both the top and bottom end caps 36, 37 are fabricated from polypropylene. However, they can be fabricated from any sufficiently impervious material, including other polymers.

The top end cap 36 comprises a circular disc having a diameter equal to the inside diameter of the side wall 15. It is preferably disposed coaxially within the housing 11 a short distance from and parallel to the top wall 13 and is joined to the side wall 15. While the top end cap 36 completely encloses the top end 40 of the filter assembly 35, it includes peripheral perforations 41 which allow liquid to flow between the upper space 42, i.e., the space between the top end cap 36 and the top wall 13 of the housing 11, and the annular space 43, i.e., the space between the exterior of the filter assembly 34 and the side wall 15 of the housing 11.

The bottom end cap 37 comprised a circular disc which, in the preferred embodiment, has a diameter smaller than the inside diameter of the side wall 15 of the housing 11 but at least equal to the outside diameter of the filter assembly 35. The bottom end cap 37 is disposed coaxially within the housing and is joined to the bottom wall 14. Except for a central hole 44 in the bottom end cap 37 which allows liquid to flow between a central space 45 in the filter assembly 35 and the outlet 30, the bottom end cap 37 completely encloses the bottom end 46 of the filter assembly 35.

The filter assembly 35 comprises a cylindrical filter 50 for removing particulate contaminants and a cylindrical sorbent bed 51 for removing chemical contaminants, both disposed upstream from a cylindrical filter 52 for removing pathogenic microbiological contaminants The cylindrical geometry of the filter arrangement 12 minimizes the resistance to the flow of liquid through the filter cartridge 10 compared to comparably sized conventional axial flow filter cartridges capable of filtering such substances. Consequently, the exemplary filter cartridge 10 provides reasonable flow rates even for a small pressure differential between the inlet 22 and outlet 30.

In a preferred embodiment, the particulate filter 50 and the sorbent bed 51 comprise distinct upstream and downstream regions, respectively, of a cylindrical, nonwoven, microfibrous filter element 53 composed of a fibrous mass of the type which is disclosed in EP-A-0 148 638. As disclosed in that application, the fibrous mass comprises a mass of nonwoven, synthetic polymeric microfibers (e.g., polypropylene microfibers) free of fiber-to-fiber bonding and maintained by mechanical entanglement or intertwining of the microfibers. As further disclosed, this fibrous mass may be fabricated in a graded pore size configuration, i.e., a configuration having pore sizes which decrease progressively with decreasing radius of the cylindrical fibrous mass, or a constant pore size configuration and may have various additives or combinations of additives, such as activated carbon or ion exchange resins, interspersed in the fibrous mass.

In a preferred embodiment, the upstream region 50 of the microfibrous filter element 53 comprises a graded pore size configuration having, for example, an upstream absolute pore rating in the range from about 50 micrometers to about 150 micrometers and a downsteam absolute pore rating in the range from about 0.5 micrometer to about 5 micrometers. A graded pore size configuration is highly effective for removing certain microorganisms and other fine particulates while delaying the onset of clogging due to gross contamination components in the influent stream. The downstream region 51 of the microfibrous filter element 53 may comprise a microporous fiber matrix having a constant pore size configuration and containing particles of sorbent material, i.e., a material which adsorbs or absorbs contaminants, such as activated carbon, reticulated water service resins, activated alumina, molecular sieve, ion exchange resins, and/or attapulgite clay for removing a broad spectrum of chemical contaminants. Particles in a wide variety of size ranges may be used, including particles in the size range of about 50 x 100 U.S. Sieve Series. Since the sorbent particles are bound, i.e., immobilized, within the fiber matrix of the filter element 53, settling and channeling of the sorbent bed due to shock or vibration are minimized or even precluded, enhancing both the reliability and the durability of the filter cartridge 10.

While the filter assembly 35 of the preferred embodiment of the filter cartridge 10 comprises distinct upstream and downstream regions 50, 51 of a single filter element 53, the filter assembly 35 could alternatively comprise any appropriately configured and suitably fashioned particulate filter and sorbent bed. The particulate filter may comprise, for example, a woven mesh of glass fibers or a pleated, porous nylon membrane while the sorbent bed may comprise a compressibly-loaded bed of loose sorbent particles or a binder-immobilized sorbent particle bed as described in EP-A-0 159 698, and EP-A-0172003.

In accordance with EP-A-0 159 698, the sorbent particle bed may comprise a bed of binder-immobilized sorbent particles in which sorbent particles, such as particles of activated carbon, are mixed with a suitable polymeric binding material, such as powdered polyethylene. The mixture is then heated and compressed to the solid-liquid transition stage of the binding material, yielding a binder-immobilized sorbent particle bed once the mixture cools. A similar process for immobilizing inorganic sorbent particles is disclosed in EP-A-0 172 003.

To remove microbiological contaminants, any suitable microporous polymeric membrane may be used, including membranes having certain surface charged properties. These membranes have a pore rating in the range from 0.02 micrometer to 0.5 micrometer. The downstream microbiological filter 52 of the exemplary filter assembly 35 preferably comprises a microporous membrane such as a surface-modified, hydrophilic, microporous polyamide membrane having an absolute pore rating of about 0.2 micrometer. This membrane is described in EP-A-0 090 483, and is available under the trademark POSIDYNE from Pall Corporation. As disclosed in that application, the membrane has a positive zeta potential in neutral or alkaline liquids, such as water. Consequently, the membrane is highly effective for removing both microbiological contaminants and certain ionic contaminants. The microbiological filter 52 may further comprise upstream and downstream support layers adjoining both sides of the membrane. The support layers may be fashioned from any suitable woven or nonwoven polymeric fibrous material, such as a nonwoven layer of polypropylene or polyester, terephthalate fibers.

The filter assembly 35 also comprises a cylindrical perforated core 54 disposed coaxially within the microbiological filter 52 for radially supporting the particulate filter 50, the sorbent bed 51, and the microbiological filter 52. The perforated core 54 is preferably fabricated from polypropylene, although it can be fabricated from many sufficiently rigid materials, including other polymers or sheet metal. In alternative embodiments, the filter assembly may further include a perforated cage disposed upstream from the particulate contaminant filter to support and protect the particulate contaminant filter and/or a midstream perforated core disposed between the sorbent bed and the microbiological filter to support the sorbent bed.

The filter cartridge 10 may be fabricated and assembled according to several known techniques. For example, the upper and lower portions 16, 17 of the housing 11, the top and bottom end caps 36, 37, and the perforated core 54 may be formed by injection molding, a well known technique for fabricating polymeric structures. The microfibrous filter element 53 and the microporous polyamide membrane may be fabricated according to the disclosures in the previously referenced EP-A-0 148 638 and EP-A-0 090 483, respectively. The membrane may then be disposed between the upstream and downstream support layers to form a composite and the composite may then be pleated and arranged in a cylindrical configuration in a conventional manner to form the microbiological filter 52. The microbiological filter 52 may then be disposed within the microfibrous filter element 53 and the perforated core 54 may be disposed within the pleated membrane 52, yielding the filter assembly 35.

The top and bottom ends 43, 46 of the filter assembly 35 may then be joined to the top and bottom end caps 36, 17, respectively, for example, by spinbonding, a well known technique for joining polymeric structures, or by heat-melt sealing, a technique disclosed in Pall et al, U. S. Patent 3,457,339, yielding the filter arrangement 12. The bottom end cap 37 of the filter arrangement 12 may then be spunbound to the lower portion 17 of the housing 11, and the upper portion 16 of the housing 11 may be spunbound to both the lower portion 17 of the housing 11 and the periphery of the top end cap 36 without closing off the peripheral perforations 41.

In one preferred mode of operation, the filter cartridge 10 is connected between an upper container 55 which contains a contaminated water, and a lower container 56 which stores purified water, as shown in Figure 3. The water is fed by gravity from the upper container 55, along the supply line 26, and through the filter cartridge 10 where it is purified. The purified water is then fed along the drain line 34 and into the lower container 56. The cylindrical geometry of the filter arrangement 12 minimizes the resistance to the flow of water and, therefore, permits a reasonable flow rate, e.g., 500-2,000 ml/minute, using a small gravity head, e.g., a 27 inch (68 cm) water column. Alternatively, a pump may be installed in the supply or drain line 26, 34.

More specifically, the water flows from the upper container 55, down the supply line 26, through the coaxial hole 24 of the inlet 22, and into the upper space 42 of the filter cartridge 10. The water then flows through the peripheral perforations 41 in the top end cap 36 and into the annular space 43. To insure that the upper space 42 and annular space 43 fill with water and that all air escapes from the filter cartridge 10, the air-bleed valve 21 is opened until significant amounts of water begin escaping the filter cartridge 10 through the valve 21 and is then closed.

From the annular space 43 the water flows radially inwardly through the microfibrous filter element 53, passing first through the graded pore size upstream region 50, where particulates and certain organisms are removed, and next through the sorbentcontaining downstream region 51, where chemical contaminants are removed. The water then flows radially inwardly through the pleated membrane 52, where microbiological contaminants and certain ionic contaminants are removed. From the pleated membrane 52, the purified water flows radially inwardly through the perforated core 54 and into the central space 45 of the filter assembly 35. From the central space 45, the purified water flows axially through the central hole 44 in the bottom end cap 37, through the coaxial hole 32 of the outlet 30, along the drain line 26 and into the storage reservoir 56.

## Claims

1. A filter assembly for removing contaminants from water flowing through the filter assembly, the filter assembly including a fibrous filter (50) for removing particulate contaminants from the water, a sorbent bed (51) for removing chemical contaminants from the water downstream of the fibrous filter (50), and a member (52) for removing microbiological contaminants from the water and arranged downstream of the fibrous filter (50) and the sorbent bed (51) and the fibrous filter (50), the sorbent bed (51), and the downstream member (52) being cylindrically shaped and arranged for radial flow of water therethrough characterized in that the downstream member comprises a microporous membrane (52) having a pore rating in the range from 0.02 micrometer to 0.5 micrometer, the fibrous filter (50) comprising a microfibrous mass including a downstream portion and an upstream portion having a larger pore size than the downstream portion.

2. The filter of claim 1 wherein the upstream portion has an absolute pore rating in the range 50 micrometers to 150 micrometers and the downstream portion has an absolute pore rating in the range from 0.5 micrometer to 5 micrometers.

3. The filter assembly of claim 1 or claim 2 wherein the microfibrous mass comprises a non-woven mass of polymeric microfibers.

4. The filter assembly of any one of claims 1 to 3 wherein the sorbent bed (51) comprises a bed of immobilized sorbent particles.

5. The filter assembly of claim 4 wherein the bed (51) of immobilized sorbent particles comprises a microfibrous mass interspersed with sorbent particles.

6. The filter assembly of claim 4 wherein the bed (51) of immobilized particles comprises a mixture of polymeric binding material and sorbent particles.

7. The filter assembly of claim 6 wherein the sorbent particles comprise particles of activated carbon and the polymeric binding material comprises powdered polyethylene.

8. The filter assembly of any one of claims 1 to 5 wherein the fibrous filter (50) and the sorbent bed (51) comprise upstream and downstream regions, respectively, of a microfibrous mass, said upstream region including the upstream portion and the downstream portion and said downstream region including fiber-immobilized sorbent particles.

9. The filter assembly of any one of claims 1 to 8 wherein the microporous membrane (52) comprises a porous polymeric membrane.

10. The filter assembly of any one of claims 1 to 9 wherein the microporous membrane (52) is pleated.

11. The filter assembly Of any one of claims 1 to 10 wherein the microporous membrane (52) has a positive zeta potential in alkaline or neutral water.

12. A filter cartridge incorporating the filter assembly of any one of claims 1 to 11 and comprising a housing (11) having a water inlet (22) and a water outlet (30) and defining a water flow path therebetween, the filter assembly (35) being disposed within the housing (11) in the water flow path; a first end cap (36) enclosing a first end (40) of the filter assembly (35); and a second end cap (37) enclosing a second end of the filter assembly (35), the second end cap including an aperture (44) communicating with the outlet (30).

13. The filter cartridge of claim 12 wherein the housing (11) includes a top wall (13) and a cylindrical side wall (15); wherein the filter assembly (35) has a smaller diameter than the diameter of the side wall (15); and wherein the first end cap (36) is mounted to the side wall (15) spaced from the top wall (13) of the housing (11) and includes a plurality of apertures (41) communicating between a first space (42) between the top wall (13) and the first end cap (36) and a second space (43) between the side wall (15) and the filter assembly (35).

14. The filter cartridge of claim 12 or 13 wherein the housing (11) includes a bottom wall (14) and the second end cap (37) is disposed adjacent to the bottom wall (14).

## Patentansprüche

1. Filteranordnung zum Entfernen von Verunreinigungsstoffen aus Wasser, das durch die Filteranordnung strömt, wobei die Filteranordnung einen Faserfilter (50) zum Entfernen von festen Verunreinigungsstoffen aus dem Wasser ein Sorptionsmittelbett (51) zum Beseitigen von chemischen Verunreinigungsstoffen aus dem Wasser stromabwärts von dem Faserfilter (50) und ein Teil (52) zum Entfernen von mikrobiologischen Verunreinigungsstoffen aus dem Wasser aufweist und stromabwärts von dem Faserfilter (50) und dem Sorptionsmittelbett (51) angeordnet ist und wobei der Faserfilter (50), das Sorptionsmittelbett (51) und das abströmseitige Teil (52) zylindrisch in Form sind und für eine radiale Wasserströmung dort hindurch angeordnet ist,
**dadurch gekennzeichnet,**
daß das abströmseitige Teil eine mikroporöse Membran (52) aufweist mit einer Porenklasse in dem Bereich von 0,02 µm bis 0,5 µm, wobei der Faserfilter (50) eine Mikrofasermasse aufweist, die einen Abströmabschnitt und einen Zuströmabschnitt mit einer größeren Porengröße als auf der Abströmseite aufweist.

2. Filter nach Anspruch 1, bei der der Zuströmabschnitt eine absolute Porenklasse in dem Bereich von 50 µm bis 150 µm hat, und der Abströmabschnitt eine absolute Porenklasse in dem Bereich von 0.5 µm bis 5 µm hat.

3. Filteranordnung nach Anspruch 1 oder 2, bei der die Mikrofasermasse eine nicht gewebte Masse polymerer Mikrofasern aufweist.

4. Filteranordnung nach einem der Ansprüche 1 bis 3, bei der das Sorptionsmittelbett (51) ein Bett von immobilisierten Sorbenspartikeln aufweist.

5. Filteranordnung nach Anspruch 4, bei dem das Bett (51) von immobilisierten Sorbenspartikeln eine Mikrofasermasse aufweist, die mit Sorbenspartikeln durchsetzt ist.

6. Filteranordnung nach Anspruch 4, bei der das Bett (51) der immobilisierten Partikel ein Gemisch von polymerem Bindematerial und Sorbenspartikeln aufweist.

7. Filteranordnung nach Anspruch 6, bei der die Sorbenspartikel Partikel von Aktivkohle aufweisen und das polymere Bindemittel pulverisiertes Polyethylen aufweist.

8. Filteranordnung nach einem der Ansprüche 1 bis 5, bei der der Faserfilter (50) und das Sorptionsmittelbett (51) Zuström- bzw. Abströmbereiche einer Mikrofasermasse aufweisen, wobei der Zuströmbereich den Zuströmabschnitt und den Abströmabschnitt einschließt und der Abströmbereich faser-immobilisierte Sorbenspartikel einschließt.

9. Filteranordnung nach einem der Ansprüche 1 bis 8, bei der die mikroporöse Membran (52) eine poröse polymere Membran aufweist.

10. Filteranordnung nach einem der Ansprüche 1 bis 9, bei der die mikroporöse Membran (52) gefaltet ist.

11. Filteranordnung nach einem der Ansprüche 1 bis 10, bei der die mikroporöse Membran (52) ein positives Zetapotential in alkalischem oder neutralem Wasser hat.

12. Filterpatrone, in die die Filteranordnung nach einem der Ansprüche 1 bis 11 eingebaut ist, und die ein Gehäuse (11) mit einem Wassereinlaß (22) und einem Wasserauslaß (30) aufweist und die einen Wasserströmungsweg dazwischen definiert, wobei die Filteranordnung (35) innerhalb des Gehäuses (11) in dem Wasserströmungsweg angeordnet ist; wobei eine erste Endkappe (36) ein erstes Ende (40) der Filteranordnung (35) einschließt; und eine zweite Endkappe (37) ein zweites Ende der Filteranordnung (35) einschließt, wobei die zweite Endkappe eine Öffnung (44) einschließt, die mit dem Auslaß (30) in Verbindung steht.

13. Filterpatrone nach Anspruch 12, bei der das Gehäuse (11) eine obere Wand (13) und eine zylindrische Seitenwand (15) aufweist; wobei die Filteranordnung (35) einen kleineren Durchmesser als der Durchmesser der Seitenwand (15) hat; und wobei die erste Endkappe (36) an der Seitenwand (15) beabstandet von der oberen Wand (13) des Gehäuses (11) montiert ist und eine Vielzahl von Öffnungen (41) einschließt, die zwischen einem ersten Zwischenraum (42) zwischen der oberen Wand (13) und der ersten Endkappe (36) und einen zweiten Zwischenraum (43) zwischen der Seitenwand (15) und der Filteranordnung (35) eine Verbindung herstellt.

14. Filterpatrone nach Anspruch 12 oder 13, bei der das Gehäuse (11) eine Bodenwand (14) aufweist und die zweite Endkappe (37) neben der Bodenwand (14) angeordnet ist.

## Revendications

1. Ensemble filtre destiné à retirer les contaminants de l'eau coulant à travers l'ensemble filtre, l'ensemble filtre comprenant un filtre fibreux (50) destiné à retirer les contaminants particulaires de l'eau, un lit de sorbant (51) destiné à retenir les contaminants chimiques de l'eau en aval du filtre fibreux (50) et un élément (52) destiné à retirer les contaminants microbiologiques de l'eau, disposé en aval du filtre fibreux (50) ainsi que du lit de sorbant (51), le filtre fibreux (50), le lit de sorbant (51) et l'élément en aval (52) ayant une forme cylindrique et étant disposés de façon à être traversés radialement par le courant d'eau, caractérisé en ce que l'élément en aval comprend une membrane microporeuse (52) ayant une grosseur de pore comprise dans la plage de 0,02 µm à 0,5 µm, le filtre fibreux (50) comprenant une masse microfibreuse comportant une partie en aval et une partie en amont ayant des pores plus gros que la partie en aval.

2. Ensemble filtre selon la revendication 1, dans lequel la partie en amont a une grosseur de pore absolue comprise dans la plage de 50 µm à 150 µm et la partie en aval a une grosseur de pore absolue comprise dans la plage de 0,5 µm à 5 µm.

3. Ensemble filtre selon la revendication 1 ou 2, dans lequel la masse microfibreuse comprend une masse non tissée de microfibres polymères.

4. Ensemble filtre selon l'une quelconque des revendications 1 à 3, dans lequel le lit de sorbant (51) comprend un lit de particules de sorbant immobilisées.

5. Ensemble filtre selon la revendication 4, dans lequel le lit (51) de particules de sorbant immobilisées comprend une masse microfibreuse parsemée de particules de sorbant.

6. Ensemble filtre selon la revendication 4, dans lequel le lit (51) de particules immobilisées comprend un mélange de liant polymère et de particules de sorbant.

7. Ensemble filtre selon la revendication 6, dans lequel les particules de sorbant comprennent des particules de carbone activé et le liant polymère comprend du polyéthylène pulvérisé.

8. Ensemble filtre selon l'une quelconque des revendications 1 à 5, dans lequel le filtre fibreux (50) et le lit de sorbant (51) comprennent des régions respectives en amont et en aval d'une masse microfibreuse, ladite région en amont comprenant la partie en amont et la partie en aval et ladite région en aval comprenant des particules de sorbant immobilisées dans les fibres.

9. Ensemble filtre selon l'une quelconque des revendications 1 à 8, dans lequel la membrane microporeuse (52) comprend une membrane polymère poreuse.

10. Ensemble filtre selon l'une quelconque des revendications 1 à 9, dans lequel la membrane microporeuse (52) est plissée.

11. Ensemble filtre selon l'une quelconque des revendications 1 à 10, dans lequel la membrane microporeuse (52) a un potentiel zêta positif dans l'eau basique ou neutre.

12. Cartouche filtrante contenant l'ensemble filtre selon l'une quelconque des revendications 1 à 11 et comprenant un boîtier (11) ayant une entrée d'eau (22) et une sortie d'eau (30) et définissant un chemin d'écoulement de l'eau entre celles-ci, l'ensemble filtre (35) étant disposé à l'intérieur du boîtier (11) dans le chemin d'écoulement de l'eau ; un premier capuchon terminal (36) enfermant une première extrémité (40) de l'ensemble filtre (35) ; et un second capuchon terminal (37) enfermant une seconde extrémité de l'ensemble filtre (35), le second capuchon terminal comprenant une ouverture (44) communiquant avec la sortie (30).

13. Cartouche filtrante selon la revendication 12, dans laquelle le boîtier (11) comprend une paroi supérieure (13) et une paroi latérale cylindrique (15) ; dans laquelle l'ensemble filtre (35) a un diamètre inférieur au diamètre de la paroi latérale (15) ; et dans laquelle le premier capuchon terminal (36) est monté sur la paroi latérale (15) à distance de la paroi supérieure (13) du boîtier (11) et comprend une pluralité d'ouvertures (41) faisant communiquer un premier espace (42) entre la paroi supérieure (13) et le premier capuchon terminal (36) avec un second espace (43) entre la paroi latérale (15) et l'ensemble filtre (35).

14. Cartouche filtrante selon la revendication 12 ou 13, dans laquelle le boîtier (11) comprend une paroi inférieure (14) et le second capuchon terminal (37) est accolé à la paroi inférieure (14).
